**Europäisches Patentamt**

**European Patent Office**

**Office européen des brevets**

(19)

(11) Publication number : **0 415 335 B1**

(12) # EUROPEAN PATENT SPECIFICATION

(45) Date of publication of patent specification :
**02.11.94 Bulletin 94/44**

(51) Int. Cl.⁵ : **G11B 5/66,** G11B 5/64,
G11B 5/84

(21) Application number : **90116439.2**

(22) Date of filing : **28.08.90**

(54) **Magnetic recording medium.**

(30) Priority : **30.08.89 JP 223558/89**
**30.08.89 JP 223562/89**

(43) Date of publication of application :
**06.03.91 Bulletin 91/10**

(45) Publication of the grant of the patent :
**02.11.94 Bulletin 94/44**

(84) Designated Contracting States :
**DE FR GB**

(56) References cited :
**DE-A- 3 113 559**
**GB-A- 2 072 406**
**PATENT ABSTRACTS OF JAPAN,vol. 8, no.
181 (E-261)(1618) 21 August 1984, & JP-A-59
74607 (FUJI SHASHIN FILM K.K.) 27 April 1984
PATENT ABSTRACTS OF JAPAN vol. 8, no.
183 (P-296)(1620) 23 August 1984, & JP-A-59-
75426 (FUJI SHASHIN FILM K.K.) 28 April 1984
PATENT ABSTRACTS OF JAPAN vol. 010, no.
152 (P-462) 03 June 1986, & JP-A-61 005424
(MATSUSHITA DENKI SANGYO K.K.) 11
January 1986**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Sugita, Ryuji
8-7, Ogura-cho
Hirakata-shi, Osaka-fu (JP)**
Inventor : **Tohma, Kiyokazu
26-5, Iganishi-machi
Hirakata-shi, Osaka-fu (JP)**
Inventor : **Honda, Kazuyoshi
1-5-34, Jonan-cho
Takatsuki-shi, Osaka-fu (JP)**
Inventor : **Kawawake, Yasuhiro
1-1-A1-213, Satakedai
Suita-shi, Osaka-fu (JP)**
Inventor : **Ishida, Tatsuaki
6-998-3-3-1421, Nakamozu-cho
Sakai-shi, Osaka-fu (JP)**

(74) Representative : **Eisenführ, Speiser & Partner
Martinistrasse 24
D-28195 Bremen (DE)**

## Description

The invention relates to a thin film magnetic recording medium comprising a nonmagnetic substrate, and a first and second magnetic layer which comprise cobalt and have axes of easy magnetization which slant at an angle to the normal of the plane of the magnetic recording medium. The invention particularly refers to a recording medium which has good high density recording characteristics and is suitable for recording digital signals.

Perpendicular recording systems are known to have good recording characteristics in the short-wave length range. Such systems are for instance described in IEEE Transactions On Magnetics Vol. MAG-20 No. 5, September 1984, pages 903-905, and Vol. MAG-23 No. 5, September 1987, pages 2049-2051.

Perpendicular recording systems require a perpendicular recording medium which has magnetic anisotropy in a direction perpendicular to a plane of the magnetic recording medium, namely perpendicular magnetic anisotropy. When a signal is recorded on the perpendicular recording medium, magnetization is in a direction perpendicular to the plane of recording medium. Therefore, as the wavelength of signal decreases, diamagnetization in the recording medium decreases so that higher reproducing output is achieved.

One of conventional perpendicular magnetic recording media is prepared by forming a cobalt-based alloy magnetic layer having perpendicular magnetic anisotropy by sputtering or vacuum deposition directly on a nonmagnetic substrate such as a plastic film or through a nonmagnetic under layer such as Ti, Ge, Si, CoO, $SiO_2$ or a polymer.

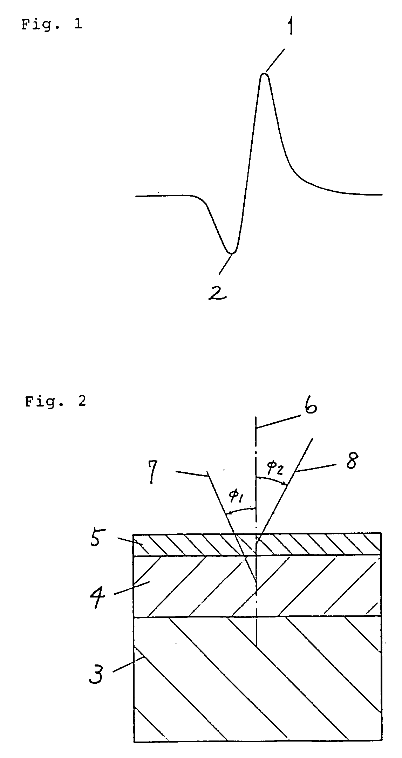

Although the conventional perpendicular magnetic recording media have good reproducing characteristics in a short-wavelength range, their reproducing waveform is unsatisfactory. That is, when an isolated waveform is recorded on and reproduced from the perpendicular magnetic recording medium with a conventional ring-shaped magnetic head, a reproduced waveform as shown in Fig. 1 is obtained, which is so-called a dipulse. Such reproduced waveform has a sub-pulse 2 just before a main pulse 1, and its processing is difficult. Since, when the dipulse waveform as such is processed as a digital signal, the sub-pulse causes an error or a peak shift, it is necessary to apply some circuit processing to the pulse. However, it is difficult to supply such processing circuit. Then, it is highly desired to develop a perpendicular magnetic recording medium which can reproduce an isolated waveform having a non-dipulse form and a narrow pulse width.

In addition, output and an S/N ratio of the conventional perpendicular magnetic recording medium are not sufficiently large in comparison with a metal powder magnetic tape (MP tape) and a metal evaporated tape (ME tape). The conventional perpendicular magnetic recording medium has unsatisfactory durability. Then, it is still desired to provide a perpendicular magnetic recording medium having much larger output and S/N ratio than the MP and ME tapes and improved durability.

From JP-A-59/74607 or JP-A-59/75426 a thin film magnetic recording medium is known, comprising a nonmagnetic substrate onto which two magnetic layers are deposited by using two different evaporating sources. The steps as disclosed in these publications are used to improve anti-rust property of the recording medium. A minimum slant angle of vapor steam is used, so that the easy magnetization axis would slant by an angle to the normal of the plane of the magnetic recording medium.

It is an object of the present invention to provide a thin film magnetic recording medium having good high density recording characteristics in which particularly the peak shift is small.

According to the invention, a thin film magnetic recording medium of the kind defined is characterized in that the second magnetic layer has a thickness of 0.02 to 0.1 μm and a smaller thickness than that of said first magnetic layer, and that the angle of the axis of easy magnetization of the first magnetic layer is different from that of the second magnetic layer.

Preferable embodiments are defined in the dependent claims.

Fig. 1 shows an isolated waveform which is recorded on and reproduced from a conventional perpendicular magnetic recording medium with a ring-shaped magnetic head,

Fig. 2 is a cross-sectional view of one embodiment of the thin film magnetic recording medium according to the present invention,

Fig. 3 schematically illustrates one embodiment of a vacuum evaporation apparatus for producing the thin film magnetic recording medium according to the present invention,

Fig. 4 shows an isolated waveform which is recorded on and reproduced from the thin film magnetic recording medium according to the present invention with a ring-shaped magnetic head,

Figs. 5A and 5B show isolated waveforms which are recorded on and reproduced from the thin film magnetic recording media having an axis of easy magnetization which slants at an angle to the normal of a plane of magnetic recording medium with a ring-shaped magnetic head,

Fig. 6 is a cross-sectional view of another embodiment of the thin film magnetic recording medium according to the present invention, and

Fig. 7 schematically illustrates another embodiment of a vacuum evaporation apparatus for producing the thin film magnetic recording medium according to the present invention.

## DETAILED DESCRIPTION OF THE DRAWINGS

The present invention will be explained in detail by making reference to the accompanying drawings.

Fig. 2 shows a cross sectional view of one embodiment of the thin film magnetic recording medium according to the present invention.

The thin film magnetic recording medium of Fig. 2 comprises a nonmagnetic substrate 3 made of, for example, a plastic material, a first magnetic layer 4 having an axis of easy magnetization 7 which slants at an angle $\phi_1$ to a normal 6 of the plane of magnetic recording medium and a second magnetic layer 5 having an axis of easy magnetization 8 which slants at an angle $\phi_2$ to the normal 6 of the plane of magnetic recording medium.

The absolute value of each of the angles $\phi_1$ and $\phi_2$ is from 20 to 70°, preferably from 30 to 60°.

The first and second magnetic layers comprise a thin film of any of cobalt base magnetic materials used in the conventional perpendicular magnetic recording medium, for example, Co-Cr, Co-Cr-Ni, Co-O and Co-Ni-O, which may contain a small amount of impurities such as copper or aluminum.

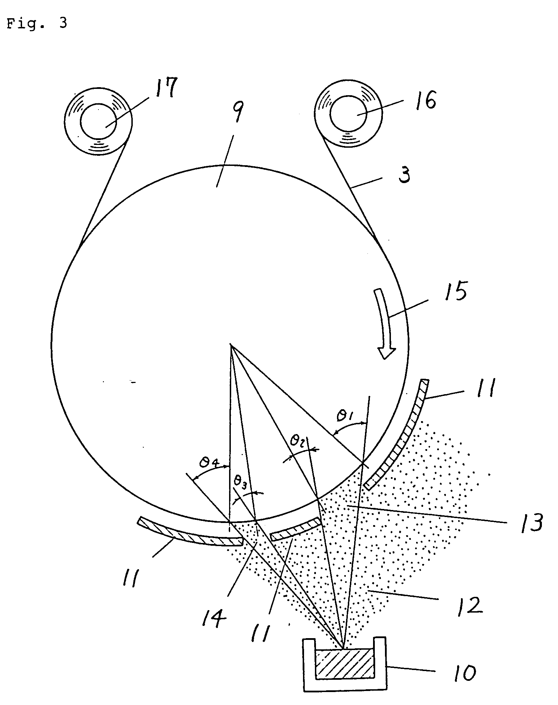

One embodiment of a method for producing the thin film magnetic recording medium of Fig. 2 will be explained by making reference to Fig. 3.

The thin film magnetic recording medium the axis of easy magnetization of which slants at an angle to the normal of the plane of magnetic recording medium can be produced by a vacuum deposition method. In the vacuum deposition method, the magnetic layers are formed on a substrate material such as a plastic film which is moved around a peripheral surface of a cylindrical can.

Fig. 3 schematically illustrates one embodiment of a vacuum deposition apparatus for producing the thin film magnetic recording medium.

The substrate 3 is unwound from a supply roll 16, travels around the peripheral surface of the cylindrical can 9 and wound on a take-up roll 17.

Between an evaporation source 10 of a magnetic material and the cylindrical can 9, there is provided a shielding plate 11, and the evaporated magnetic metal 12 is deposited on the substrate 3 through windows 13 and 14 formed in the shielding plate 11.

When the substrate 3 travels in a direction indicated by an arrow 15, the first and second magnetic layers are formed by the evaporated magnetic metal which passes through the windows 13 and 14, respectively.

As an evaporation source for evaporating the magnetic metals having high melting points at high rates, an electron beam evaporation source is suitable.

Angles $\theta_1$ and $\theta_2$ are incident angles at which the evaporated magnetic metal is impinged at a deposition starting point and a deposition ending point for the first magnetic layer, respectively. Angles $\theta_3$ and $\theta_4$ are incident angles at which the evaporated magnetic metal is impinged at a deposition starting point and a deposition ending point for the second magnetic layer, respectively.

When the magnetic layers are formed on the substrate 3 which travels in the direction of the arrow 15, the thin film magnetic recording medium having the structure of Fig. 2 is produced.

When the first magnetic layer 4 is formed in an area corresponding to the window 13, the incident angle of the magnetic metal to the substrate changes from $\theta_1$ to $\theta_2$ as the magnetic layer grows. In the present invention, the incident angle of the first magnetic layer is preferably from 10 to 70°.

When the second magnetic layer 5 is formed in an area corresponding to the window 14, the incident angle of the magnetic metal to the substrate changes from $\theta_3$ to $\theta_4$ as the magnetic layer grows. In the present invention, the incident angle of the second magnetic layer is also preferably from 10 to 70°.

In the structure of Fig. 2, the axes of easy magnetization of the first and second magnetic layer slant in the different directions from the normal of the plane of magnetic recording medium.

While the apparatus of Fig. 3 has only one evaporation source and the first and second magnetic layer are successively formed, it is possible to provide two evaporation sources one of which is for forming the first magnetic layer and the other of which is for forming the second magnetic layer.

Alternatively, in the first traveling of the substrate, only the first magnetic layer is formed and the substrate having the first layer is once wound, and then the second layer is formed on the first layer in the second traveling of the substrate having the first magnetic layer.

Actually, a thin film magnetic recording medium was produced with the apparatus of Fig. 3 at $\theta_1$ of 50°, $\theta_2$ of 30°, $\theta_3$ of 20° and $\theta_4$ of 40 by evaporating a Co-Cr alloy (in a weight ratio of Co/Cr of about 80/20) from the source 10. As the substrate, a polyimide film having a thickness of 8 μm was used. The formed first and second layers had thicknesses of 0.15 and 0.05 μm.

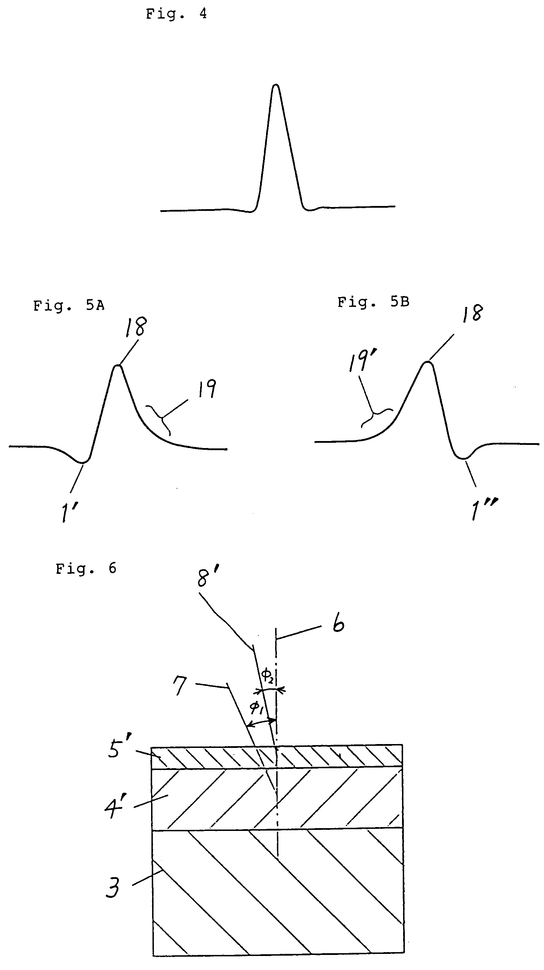

The substrate carrying the first and second layers was cut to a width of 8 mm to produce a thin film magnetic recording tape. On the tape, an isolated waveform was recorded with a ring-shaped magnetic head made of Mn-Zn ferrite having a gap length of 0.15 μm, and a reproduced waveform was observed with an oscilloscope. The observed waveform is shown in Fig. 4, which is particularly suitable as a digital signal. A half-value width of this reproduced waveform was as narrow as 0.07 μs when a relative speed of the medium against the magnetic head was 3.8 m/s.

For comparison, the same test as above was repeated with a conventional MP and ME tapes for an 8 mm video (manufactured by Sony). The half-value width was about 0.11 μs. With the conventional Co-Cr perpendicular magnetic recording medium manufacture by the inventors, the main pulse had the half-value width of 0.07 μs, but the sub-pulse was present.

The above results mean that the thin film magnetic recording medium according to the present invention has a better reproduced waveform than the conventional magnetic recording media.

A reason why the thin film magnetic recording medium according to the present invention has the above good reproduced waveform may be as follows:

When a signal is recorded on the thin film magnetic recording medium according to the present invention with the ring-shaped magnetic head, the magnetization recorded in the first and second magnetic layers slants from the normal of the plane of the magnetic recording medium. Further, the magnetization recorded in the first magnetic layer and that recorded in the second magnetic layer slant in different directions because of the directions of the axes of easy magnetization in the magnetic layers. When the signal recorded on the thin film magnetic recording medium as above is reproduced with the ring-shaped magnetic head, the reproduced waveform has no or small sub-pulse and a small pulse width. A cause for this may be assumed as-follows:

The reproduced waveforms from the first and second magnetic layers are separately discussed. The signals from the first and second magnetic layers have waveforms of Figs. 5A and 5B, respectively. The sub-pulse 1′ in Fig. 5A is compensated by a part 19′ of the pulse 18 of Fig. 5B, while the sub-pulse 1″ in Fig. 5B is compensated by a part 19 of the pulse 18 of Fig. 5A. A composite pulse of the pulses of Figs. 5A and 5B as shown in Fig. 4 has substantially no sub-pulse and is suitable as a digital signal.

Although the Co-Cr alloy is used as the magnetic metal in the first and second magnetic layer, other magnetic metal alloy or partial oxide such as Co-Ni-Cr, Co-O or Co-Ni-O may achieve substantially the same results as above. Among combinations of the magnetic metals in the first and second magnetic layer, a combination of the Co-Cr or Co-NiCr alloy in the first magnetic layer and the Co-O or Co-Ni-O partial oxide in the second magnetic layer is most preferable in view of the reproducing output and durability, because the Co-Cr or Co-Ni-Cr alloy in the first magnetic layer achieves the high reproducing output due to its high saturation magnetization and magnetocrystalline anisotropy, while the partial oxide in the second magnetic layer has larger hardness so that it can impart good durability to the magnetic recording medium.

The thickness of the second magnetic layer is from 0.02 to 0.1 μm. Outside this range, the isolated waveform of Fig. 4 is hardly obtained, but the waveform of Fig. 5A or 5B may be obtained. In addition, the thickness of the first magnetic layer is larger than that of the second magnetic layer, because the distance between the first magnetic layer and the magnetic head is larger than between the second magnetic layer and the magnetic head. If the thicknesses of the first and second magnetic layers are the same, a magnetic flux generated from the second magnetic layer reaches the magnetic head in a larger amount than that from the first magnetic layer and the sub-pulse remains. When the thickness of the first magnetic layer is larger than that of the second magnetic layer, the amounts of magnetic fluxes which are generated from the first and second magnetic layers and reached the magnetic head can be made substantially the same, so that the isolated reproducing waveform has no or small sub-pulse.

When each of the axes of easy magnetization slants at an angle of 20 to 70° from the normal of the plane of magnetic recording medium, the reproducing waveform having a small sub-pulse is obtained. When said angle is less than 20°, the reproduced waveform is the same as that from the conventional perpendicular magnetic recording medium. When said angle exceeds 70°, the magnetic recording medium has substantially the same characteristics as those of a conventional in-plane magnetic recording medium. In this case, the reproducing output in the high recording density range greatly decreases although no sub-pulse appears.

In the above, the structure of the thin film magnetic recording medium which provides the good reproduced waveform is explained. Now, a structure of the thin film magnetic recording medium which gives large reproducing output and has a high S/N ratio and improved durability will be explained.

Fig. 6 shows a cross-sectional view of another embodiment of the thin film magnetic recording medium according to the present invention, which comprises the substrate 3, the first magnetic layer 4′ an axis of easy magnetization 7 of which slants at an angle $\phi_1$ to a normal 6 of the plane of magnetic recording medium and the second magnetic layer 5′ having an axis of easy magnetization 8′ which slants at an angle $\phi_2$ to the normal 6 of the plane of magnetic recording medium.

The magnetic metals which constitute the first and second magnetic layers may be the same as those explained in connection with the structure of Fig. 2. Among combinations of the magnetic metals in the first and second magnetic layer, a combination of the Co-Cr or Co-Ni-Cr alloy which may contain a small amount of an impurity such as copper or aluminum in the first magnetic layer and the Co-O or Co-Ni-O partial oxide which may contain a small amount of the impurity in the second magnetic layer is most preferable.

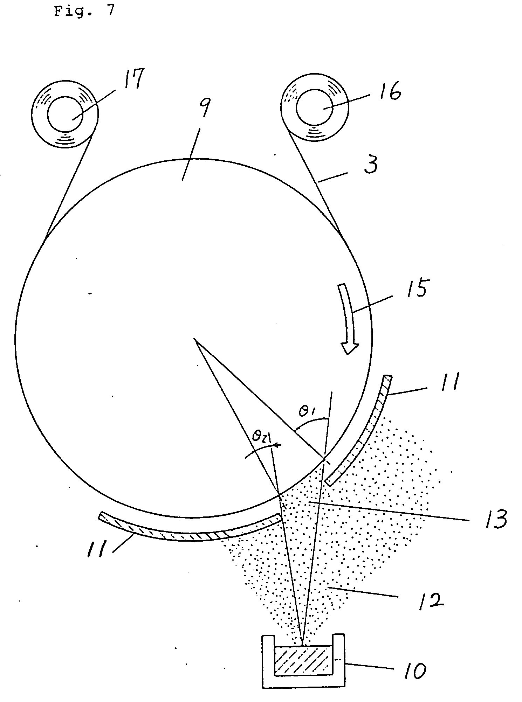

Fig. 7 schematically illustrates one embodiment of a vacuum deposition apparatus for producing the thin film magnetic recording medium of Fig. 6.

Except that the shielding plate 11 has only the window 13, the elements of the apparatus of Fig. 7 are the same as those of Fig. 3.

The substrate 3 is unwound from the supply roll 16, travels around the peripheral surface of the cylindrical can 9 and wound on the take-up roll 17. When the substrate 3 travels in a direction indicated by the arrow 15, the first magnetic layer is formed by the evaporated magnetic metal (for example, a Co-Cr alloy) which is evaporated from the source 10 and passes through the window 13. As the first magnetic layer grows, the incident angle changes from $\theta_1$ to $\theta_2$. The incident angle is preferably from 10 to 70°. In this range, the magnetic recording medium the axis of easy magnetization of which slants at an angle to the normal of the plane of magnetic recording medium and which provides high reproducing output can be produced.

Then, the material in the source 10 is changed to the magnetic metal for the second magnetic layer (for example, Co), and the substrate 3 carrying the first magnetic layer 4' was unwound from the roll 17 and traveled in the direction reverse to the arrow 15 while evaporating the magnetic metal in an oxygen-containing atmosphere to deposit the second magnetic layer 5'. Since the second magnetic layer is formed in the oxygen-containing atmosphere, it comprises partly oxidized metal. To have the axis of easy magnetization of the second magnetic layer slant from the normal of the plane of magnetic recording medium, the incident angle should be from 10 to 70°.

The reproducing output and noise of the thin film magnetic recording medium produced as above at 130 kFRPI (which means a recording condition having 130,000 reversals of magnetization per one inch) were measured. The results are shown in Table together with those for the conventional magnetic recording media. In the above measurements, a ring-shaped magnetic head made of Mn-Zn ferrite having a gap length of 0.15 $\mu$m was used. The first and second magnetic layers had the thicknesses of 0.15 and 0.05 $\mu$m, respectively. The angles $\theta_1$ and $\theta_2$ in Fig. 7 were 50° and 30°, respectively.

## Table

| Magnetic recording medium | Reproducing output (dB) | Noise (dB) |
|---|---|---|
| MP tape (for 8 mm VTR) | 0 | 0 |
| ME tape (for 8 mm VTR) | +6 | -1 |
| Conventional Co-Cr perpendicular magnetic recording medium | +11 | 0 |
| Thin film magnetic recording medium of the present invention | +15 | -1 |

As seen from the above results, the magnetic recording medium according to the present invention has much larger reproducing output and lower noise than the conventional magnetic recording media. Then, the magnetic recording medium according to the present invention has a high S/N ratio.

Since the second magnetic layer consists of the partly oxidized layer of cobalt, the magnetic recording medium according to the present invention has better durability than the conventional cobalt-chromium perpendicular magnetic recording media.

Since the axes of easy magnetization slant from the normal of the plane of magnetic recording medium, signals can be easily recorded with the ring-shaped magnetic head.

Since the axis of easy magnetization is not present in the plane, its demagnetization function is weak and high recording magnetization remains. Therefore, the high reproducing output is achieved.

When the Co-Cr alloy is used to form the first magnetic layer, the output is increased due to its high saturation magnetization and magnetocrystalline anisotropy.

When the second magnetic layer comprises the cobalt base partial oxide, the durability of the thin film magnetic recording medium is improved. In addition, since the second magnetic layer is not a mere protecting layer, it can record the signals and contributes to the output.

The thickness of the second layer is from 0.02 to 0.1 $\mu$m. When this thickness is less than 0.02 $\mu$m, the durability of the magnetic recording medium is not satisfactory. When this thickness exceeds 0.1 $\mu$m, the output is decreased. This may be because the distance between the first magnetic layer and the magnetic head becomes larger.

When the angles $\phi_1$ and $\phi_2$ are both in the range from 20° to 70°, the high reproducing output is achieved. When these angles are less than 20°, the reproducing output is in the same level as the conventional perpendicular magnetic recording media. When these angles exceed 70°, the reproducing output is in the same level as the conventional in-plane magnetic recording media.

## Claims

1. A thin film magnetic recording medium comprising a nonmagnetic substrate (3), and a first and second magnetic layer (4, 5; 4′, 5′) which comprise cobalt and have axes (7, 8; 7′, 8′) of easy magnetization which slant at an angle to the normal (6) of the plane of the magnetic recording medium,
   characterized in that
   the second magnetic layer (5; 5′) has a thickness of 0.02 to 0.1 $\mu$m and a smaller thickness than that of said first magnetic layer (4; 4′), and that the angle ($\phi 1$) of the axis of easy magnetization of the first magnetic layer (4; 4′) is different from that ($\phi 2$) of the second magnetic layer (5; 5′).

2. The thin film magnetic recording medium according to claim 1, wherein the absolute value of the angle ($\phi 1$) at which the axis (7′) of easy magnetization in the first magnetic layer (4′) slants from the normal (6) of the plane of magnetic recording medium is different from the absolute value of the angle ($\phi 2$) at which the axis (8′) of easy magnetization in the second magnetic layer (5′) slants from the normal (6) of the plane of magnetic recording medium.

3. The thin film magnetic recording medium according to claim 1 or 2, wherein the axis (7) of easy magnetization in the first magnetic layer (4) slants from the normal (6) of the plane of magnetic recording medium in a different direction from the axis (8) of easy magnetization in the second magnetic layer (5).

4. The thin film magnetic recording medium according to any of claims 1 to 3, wherein the first and second magnetic layers (4, 5; 4′, 5′) comprises a magnetic material selected from the group consisting of an Co-Cr alloy, an Co-Ni-Cr alloy, a Co-O partial oxide and Co-Ni-O partial oxide.

5. The thin film magnetic recording medium according to any of claims 1 to 3, wherein the first magnetic layer (4; 4′) comprises a magnetic metal alloy selected from the group consisting of a Co-Cr alloy and a Co-Ni-Cr alloy, and the second magnetic layer (5; 5′) comprises a magnetic metal partial oxide selected from the group consisting of a Co-O partial oxide and a Co-Ni-O partial oxide.

6. The thin film magnetic recording medium according to claim 2, wherein the first magnetic layer (4′) comprises a Co-Cr alloy, the second magnetic layer (5′) comprises a Co-O partial oxide, and the axes (7′, 8′) of easy magnetization in the first and second magnetic layers slant from the normal (6) of the plane of magnetic recording medium in the same direction.

## Patentansprüche

1. Magnetisches Dünnschicht-Aufzeichnungsmedium mit einem nicht magnetischen Substrat (3), und einer ersten und einer zweiten magnetischen Schicht (4, 5; 4′, 5′), welche Cobalt enthalten und Achsen (7, 8; 7′, 8′) leichter Magnetisierbarkeit aufweisen, die gegen das Lot (6) auf die Ebene des magnetischen Aufzeichnungsmediums mit einem Winkel geneigt sind,

**dadurch gekennzeichnet,** daß

die zweite magnetische Schicht (5; 5′) eine Dicke von 0,02 bis 0,1 μm und eine kleinere Dicke als die erste magnetische Schicht (4; 4′) hat und daß der Winkel ($\phi$1) der Achse leichter Magnetisierbarkeit der ersten magnetischen Schicht (4; 4′) sich von demjenigen ($\phi$2) der zweiten magnetischen Schicht (5; 5′) unterscheidet.

2. Magnetisches Dünnschicht-Aufzeichnungsmedium nach Anspruch 1, wobei der Absolutwert des Winkels ($\phi$1), mit dem die Achse (7′) leichter Magnetisierbarkeit der ersten magnetischen Schicht (4′) gegen das Lot (6) auf die Ebene des magnetischen Aufzeichnungsmediums geneigt ist, sich vom Absolutwert des Winkels ($\phi$2) unterscheidet, mit dem die Achse (8′) leichter Magnetisierbarkeit der zweiten magnetischen Schicht (5′) gegen das Lot (6) auf die Ebene des magnetischen Aufzeichnungsmediums geneigt ist.

3. Magnetisches Dünnschicht-Aufzeichnungsmedium nach Anspruch 1 oder 2, wobei die Achse (7) leichter Magnetisierbarkeit der ersten magnetischen Schicht gegen das Lot (6) auf die Ebene des magnetischen Aufzeichnungsmediums in eine andere Richtung geneigt ist, als die Achse (8) leichter Magnetisierbarkeit der zweiten magnetischen Schicht (5).

4. Magnetisches Dünnschicht-Aufzeichnungsmedium nach einem der Ansprüche 1 bis 3, wobei die erste und zweite magnetische Schicht (4, 5; 4′, 5′) ein magnetisches Material enthält, welches ausgewählt ist aus der Gruppe bestehend aus einer Co/Cr-Legierung, einer Co/Ni/Cr-Legierung, einem partiellen Co-O-Oxid und einem partiellen Co/Ni-O-Oxid.

5. Magnetisches Dünnschicht-Aufzeichnungsmedium nach einem der Ansprüche 1 bis 3, wobei die erste magnetische Schicht (4; 4′) eine magnetische Metallegierung enthält, die ausgewählt ist aus der Gruppe bestehend aus einer Co/Cr-Legierung und einer Co/Ni/Cr-Legierung, und die zweite magnetische Schicht (5; 5′) ein magnetisches partielles Metalloxid enthält, welches ausgewählt ist aus der Gruppe bestehend aus einem partiellen Co-O-Oxid und einem partiellen Co/Ni-O-Oxid.

6. Magnetisches Dünnschicht-Aufzeichnungsmedium nach Anspruch 2, wobei die erste magnetische Schicht (4′) eine Co/Cr-Legierung, die zweite magnetische Schicht (5′) ein partielles Co-O-Oxid enhält und die Achsen (7′, 8′) leichter Magnetisierbarkeit der ersten und der zweiten magnetischen Schicht gegen das Lot (6) auf die Ebene des magnetischen Aufzeichnungsmediums in gleicher Richtung geneigt sind.


**Revendications**

1. Support d'enregistrement magnétique à couche mince comprenant un substrat non magnétique (3), et une première et seconde couches magnétiques (4, 5 ; 4′, 5′) qui comprend du cobalt et ont des axes (7, 8 ; 7′, 8′) de magnétisation libre qui sont inclinés selon un angle par rapport à la normale (6) au plan du support d'enregistrement magnétique,

caractérisé en ce que

la seconde couche magnétique (5 ; 5′) a une épaisseur de 0,02 à 0,1 μm et une épaisseur plus petite que celle de ladite première couche magnétique (4 ; 4′), et en ce que l'angle ($\phi_1$) de l'axe de magnétisation libre de la première couche magnétique (4 ; 4′) est différent de celui ($\phi_2$) de la seconde couche magnétique (5 ; 5′).

2. Support d'enregistrement magnétique à couche mince selon la revendication 1, dans lequel la valeur absolue de l'angle ($\phi_1$) selon lequel l'axe (7′) de magnétisation libre dans la première couche magnétique (4′) est incliné par rapport à normale (6) au plan du support d'enregistrement magnétique est différente de la valeur absolue de l'angle ($\phi_2$) selon lequel l'axe (8′) de magnétisation libre dans la seconde couche magnétique (5′) est incliné par rapport à la normale (6) au plan du support d'enregistrement magnétique.

3. Support d'enregistrement magnétique à couche mince selon la revendication 1 ou 2, dans lequel l'axe (7) de magnétisation libre dans la première couche magnétique (4) est incliné par rapport à la normale (6) au plan du support d'enregistrement magnétique dans une direction différente de l'axe (8) de magnétisation libre dans la seconde couche magnétique (5).

4. Support d'enregistrement magnétique à couche mince selon l'une quelconque des revendications 1 à 3, dans lequel les première et seconde couches magnétiques (4, 5 ; 4', 5') comprennent un matériau magnétique sélectionné à partir du groupe se composant d'un alliage de Co-Cr, d'un alliage de Co-Ni-Cr, d'un oxyde partiel de Co-O et d'un oxyde partiel de Co-Ni-O.

5. Support d'enregistrement magnétique à couche mince selon l'une quelconque des revendications 1 à 3, dans lequel la première couche magnétique (4, 4') comprend un alliage de métal magnétique sélectionné à partir du groupe se composant d'un alliage de Co-Cr et d'un alliage de Co-Ni-Cr, et la seconde couche magnétique (5, 5') comprend un oxyde partiel de métal magnétique sélectionné à partir du groupe se composant d'un oxyde partiel de Co-O et d'un oxyde partiel de Co-Ni-O.

6. Support d'enregistrement magnétique à couche mince selon la revendication 2, dans lequel la première couche magnétique (4') comprend un alliage de Co-Cr, la seconde couche magnétique (5') comprend un oxyde partiel Co-O, et les axes (7', 8') de magnétisation libre dans les première et seconde couches magnétiques sont inclinés par rapport à la normale (6) au plan du support d'enregistrement magnétique dans la même direction.

Fig. 1

Fig. 2

Fig. 3

Fig. 4

Fig. 5A

18

19

1'

Fig. 5B

18

19'

1''

Fig. 6

8'

6

7

$\phi_2$

$\phi_1$

5'

4'

3

Fig. 7